# EUROPÄISCHE PATENTSCHRIFT

(11) **EP 2 818 605 B1**
(45) Veröffentlichungstag und Bekanntmachung des Hinweises auf die Patenterteilung: **20.03.2019**
(21) Anmeldenummer: 14174037.3
(22) Anmeldetag: 26.06.2014
(51) Int. Cl.: E04B 1/64, E04G 23/02

(54) **Verfahren zum Erzeugen einer Horizontalsperre gegen aufsteigende Feuchtigkeit in einem saugfähigen Festkörper**
Method for generating a horizontal barrier against ascending humidity in an absorbent solid
Procédé de création d'une barrière horizontale contre l'humidité montante dans un corps solide absorbant

(30) Priorität: 26.06.2013 DE 102013010592
(43) Veröffentlichungstag der Anmeldung: 31.12.2014
(73) Patentinhaber: KÖSTER BAUCHEMIE AG, 26607 Aurich (DE)
(72) Erfinder: Terborg, Annette, 26607 Aurich (DE)
(74) Vertreter: Manasse, Uwe

(56) Entgegenhaltungen:
- DE-A1- 2 617 758
- DE-A1- 4 230 547
- GB-A- 786 750

## Beschreibung

Die vorliegende Erfindung betrifft ein Verfahren zum Erzeugen einer Horizontalsperre gegen aufsteigende Feuchtigkeit in einem saugfähigen Festkörper, vorzugsweise in einem Mauerwerk, in Beton oder Holz.
Die EP 1 428 951 B1 betrifft eine Vorrichtung und ein Verfahren zum automatischen Tränken eines Saugkörpers mit einer, insbesondere aushärtbaren, Flüssigkeit. Dabei wird ein Saugkörper in ein Bohrloch, das in einem saugfähigen Festkörper, wie in einem Mauerwerk, ausgebildet ist, derart eingeschoben, dass er ein aus dem Bohrloch ragendes Ende aufweist, das aus dem Bohrloch ragende Ende zumindest teilweise in eine Tränkmulde eingebracht, eine Menge der Flüssigkeit in der Tränkmulde mit einem Flüssigkeitsspiegel bereitgestellt, der sich verglichen mit dem Bohrloch auf einem niedrigeren Niveau befindet und ein Einsaugen der Flüssigkeit durch das hineinragende Ende des Saugkörpers ermöglicht, und die Flüssigkeit durch den Saugkörper eingesaugt. Die Flüssigkeit dient zur Ausbildung einer Kapillar-Wassersperre und damit einer Horizontalsperre gegen aufsteigende Feuchtigkeit.

Die GB 786 750 A offenbart die Merkmale des Oberbegriffs des Anspruchs 1. Des Weiteren ist zwischenzeitlich eine Injektionscreme auf den Markt gebracht worden, die auf Silan-/Siloxanbasis in Cremeform basiert und auf einfache Weise in ein Bohrloch eingebracht werden kann. Üblicherweise wird die Creme aus Kartuschen oder aus Beuteln in das Bohrloch eingedrückt, z. B. unter Verwendung von handelsüblichen "Fugendichtstoffpistolen". Auch werden zur Förderung des Materials sogenannte "Injektionspumpen" verwendet. Nach dem Einbringen verteilt sich dann der in der Injektionscreme enthaltene Wirkstoff auf beispielsweise das umgebende Mauerwerk. Es werden auch Wirkstoffe verwendet, die flüchtig sind und sich über die Luft verteilen können. So werden sie auch über Hohlräume hinweg in Poren und Kapillaren des Baustoffs transportiert. Diese Art der Erzeugung einer Horizontalsperre ist jedoch mit einem hohen Materialverbrauch (Wirkstoffverbrauch) verbunden, weil das Material bzw. der Wirkstoff ungewollt oft auch in Risse und Hohlstellen eindringt und darin verteilt wird.
Eine andere Form der Einbringung sind Stäbchen aus gefrorenem Injektionsmaterial. Diese werden nach dem Einbringen in das Bohrloch und dem anschließenden Auftauen zu einer Lösung, einer Dispersion oder Emulsion. Wegen der Transport-, Lager- und Einbringungsprobleme, die Stäbchen müssen durch Einfrieren hergestellt werden und bis nach dem Einbringen gefroren bleiben, was schwer sicher zu stellen ist, ist diese Methode nicht praxisgerecht.
Der vorliegenden Erfindung liegt somit die Aufgabe zugrunde, ein Verfahren zum Erzeugen einer Horizontalsperre gegen aufsteigende Feuchtigkeit bereitzustellen, das mit einem geringeren Materialverbrauch verbunden ist.

Erfindungsgemäß wird diese Aufgabe durch die folgende vier Aspekten des Anspruchs 1 gelöst. Erfindungsgemäß wird diese Aufgabe gemäß einem ersten Aspekt gelöst durch ein Verfahren zum Erzeugen einer Horizontalsperre gegen aufsteigende Feuchtigkeit in einem saugfähigen Festkörper, vorzugsweise in einem Mauerwerk, in Beton oder Holz, umfassend: vorzugsweise vollständiges Einbringen eines mit einem hydrophobierenden Material gefüllten Hohlrohres in ein Bohrloch in dem saugfähigen Festkörper, und anschließendes Herausziehen des Hohlrohres aus dem Bohrloch, derart, dass das hydrophobierende Material in dem Bohrloch verbleibt. Mit anderen Worten wird das Hohlrohr über das Material hinweg nach außen abgezogen. Das Hohlrohr ist danach zumindest i. W. leer und das Bohrloch ist gleichmäßig mit Material gefüllt. Im Übrigen kann das Hohlrohr durchaus flexibel sein.

Gemäß einem zweiten Aspekt wird diese Aufgabe gelöst durch ein Verfahren zum Erzeugen einer Horizontalsperre gegen aufsteigende Feuchtigkeit in einem saugfähigen Festkörper, vorzugsweise in einem Mauerwerk, in Beton oder Holz, umfassend: Einbringen eines Hohlrohres in ein Bohrloch in dem saugfähigen Festkörper, Einbringen eines hydrophobierenden Materials in das Hohlrohr, und anschließendes Herausziehen des Hohlrohres aus dem Bohrloch, derart, dass das hydrophobierende Material in dem Bohrloch verbleibt.

Gemäß einem dritten Aspekt wird diese Aufgabe gelöst durch ein Verfahren zum Erzeugen einer Horizontalsperre gegen aufsteigende Feuchtigkeit in einem saugfähigen Festkörper, vorzugsweise in einem Mauerwerk, in Beton oder Holz, umfassend vorzugsweise vollständiges Einbringen einer mit einem hydrophobierenden oder abdichtenden Material gefüllten schlauch- oder wurstförmigen Hülle in ein Bohrloch in dem saugfähigen Festkörper, und anschließendes Herausziehen der Hülle aus dem Bohrloch, derart, dass das hydrophobierende oder abdichtende Material in dem Bohrloch verbleibt.

Schließlich wird diese Aufgabe gemäß einem vierten Aspekt gelöst durch ein Verfahren zum Erzeugen einer Horizontalsperre gegen aufsteigende Feuchtigkeit in einem saugfähigen Festkörper, vorzugsweise in einem Mauerwerk, in Beton oder Holz, umfassend Einbringen einer schlauchförmigen Hülle in ein Bohrloch in dem saugfähigen Festkörper, Einbringen eines hydrophobierenden oder abdichtenden Materials in die Hülle, und anschließendes Herausziehen der Hülle aus dem Bohrloch, derart, dass das hydrophobierende oder abdichtende Material in dem Bohrloch verbleibt.

Vorteilhafterweise wird bei den Verfahren gemäß den ersten und zweiten Aspekten das Bohrloch nach dem Herausziehen des Hohlrohres aus seiner Mündungsseite verschlossen, z. B. mit einem Mörtel oder einem Pfropfen.

Gemäß den ersten und zweiten Aspekten wird das hydrophobierende Material mittels eines Stempels in dem Hohlrohr auf der Mündungsseite des Bohrlochs am Austreten aus dem Bohrloch beim Herausziehen des Hohlrohres gehindert. Dies kann in der Form erfolgen, dass das Hohlrohr aus dem Bohrloch herausgezogen wird, wobei ein vorhandener Stempel das hydrophobierende Material (Injektionsmaterial) im Bohrloch hält. Der Stempel befindet sich z. B. auf Höhe der Wandoberfläche an der Bohrlochöffnung. Somit wird eine gleichmäßige Verteilung des Materials im Bohrloch erreicht.
Vorteilhafterweise wird beim Herausziehen des Hohlrohres selbiges seitlich aufgeschnitten und gleichzeitig das hydrophobierende oder abdichtende Material am Austreten aus dem Bohrloch gehindert.
Günstigerweise wird bei den Verfahren gemäß den dritten und vierten Aspekten das Bohrloch nach dem Herausziehen der Hülle auf seiner Mündungsseite verschlossen.

Gemäß den dritten und vierten Aspekten wird das hydrophobierende oder abdichtende Material mittels eines Stempels in der Hülle auf der Mündungsseite des Bohrlochs am Austreten aus dem Bohrloch beim Herausziehen des Hohlrohres gehindert.
Zweckmäßigerweise verläuft bei den Verfahren gemäß den ersten bis vierten Aspekten das Bohrloch horizontal. Eine schräge oder vertikale Einbringung ist jedoch auch denkbar.
Schließlich kann vorgesehen sein, dass das hydrophobierende Material ein Wirkstoff ist oder einen Wirkstoff umfasst, der ein Kunstharz oder eine Harzlösung, insbesondere eine organische Harzlösung, ein Wasserglas oder eine Verkieselung, insbesondere auf Basis von Silikaten, insbesondere Alkalisilikate, eine Silikonemulsion, insbesondere auf Basis von Siloxan und/oder Silan, oder eine Injektionscreme, insbesondere auf Basis von Silan und/oder Siloxan, ist.

Der Erfindung liegt die überraschende Erkenntnis zu Grunde, dass durch Verwendung eines Hohlrohres bzw. einer schlauch- oder wurstförmigen Hülle eine Horizontalsperre mit deutlich geringerem Material- beziehungsweise Wirkstoffverbrauch erzeugt werden kann. Das Volumen des Materials wird durch das Aufnahmevolumen des Hohlrohres bzw. der Hülle begrenzt. Außerdem ist eine schnellere und damit kostengünstigere Einbringung möglich. Zudem wird eine schnelle und einfache, sprich praxisgerechte, fehlerfreie Verarbeitung im Vergleich zu bisherigen Einbringmethoden ermöglicht.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im Einzelnen erläutert wird. Dabei zeigt/zeigen:
- Figuren 1 bis 3: verschiedene Phasen eines Verfahrens zum Erzeugen einer Horizontalsperre gegen aufsteigende Feuchtigkeit gemäß einer besonderen Ausführungsform der vorliegenden Erfindung;
- Figur 4: eine Phase eines Verfahrens zum Erzeugen einer Horizontalsperre gegen aufsteigende Feuchtigkeit gemäß einer weiteren besonderen Ausführungsform der vorliegenden Erfindung;
- Figur 5: eine Detailansicht von Figur 4;
- Figur 6: eine Ansicht von einer mit einem hydrophobierenden oder abdichtenden Material gefüllten wurstförmigen Hülle;
- Figur 7: eine Phase eines Verfahrens zum Erzeugen einer Horizontalsperre gegen aufsteigende Feuchtigkeit gemäß einer weiteren besonderen Ausführungsform der vorliegenden Erfindung unter Verwendung der Hülle von Figur 6; und
- Figur 8: eine Teilansicht in Figur 7 von rechts.

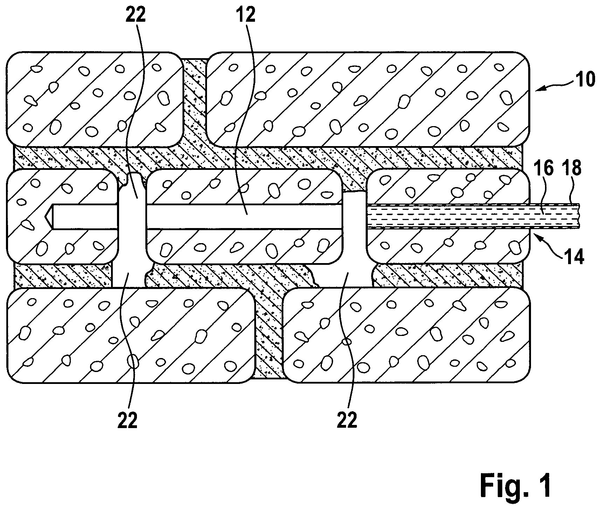

In der Figur 1 ist eine Vertikalschnittansicht durch ein Mauerwerk 10 gezeigt. In dem Mauerwerk 10 ist ein horizontal verlaufendes Bohrloch 12 mit einer Mündungsseite 14 ausgebildet. In dem in Figur 1 gezeigten Stadium wird gerade ein mit einem hydrophobierenden Material 16 gefülltes Hohlrohr 18 von der Mündungsseite 14 in das Bohrloch 12 eingebracht, im vorliegenden Fall eingeschoben. Dies kann theoretisch von Hand, aber auch mit einer speziellen Vorrichtung erfolgen. Die Vorrichtung spielt jedoch keine Rolle, da sie - für den Fachmann erkennbar und auch umsetzbar - auf sehr unterschiedliche Weise gestaltet sein kann.

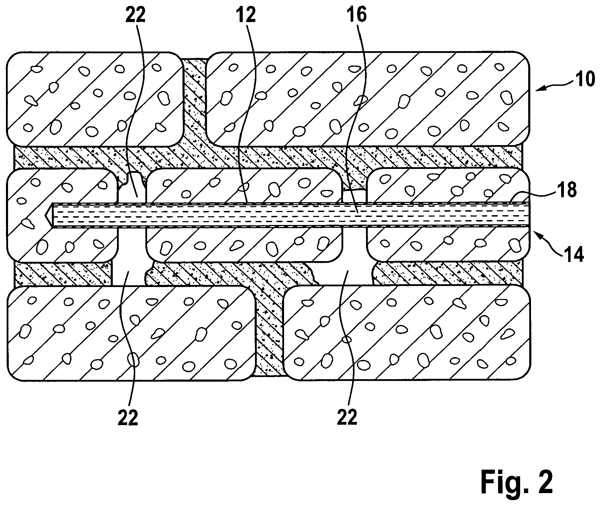

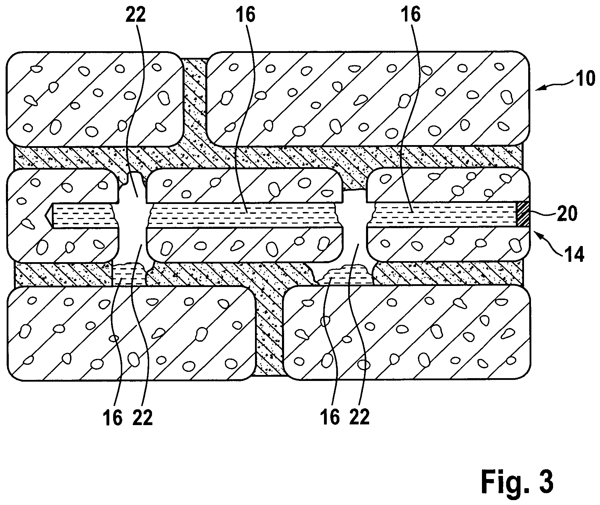

In der Figur 2 ist das Hohlrohr 18 bereits vollständig in das Bohrloch 12 eingeschoben worden. Danach wird nur das Hohlrohr 18 wieder aus dem Bohrloch 12 herausgezogen (nicht gezeigt) und wird das Bohrloch auf seiner Mündungsseite 14 mit einem geeigneten Material 20 verschlossen (siehe Figur 3). Mit anderen Worten erfolgt das Herausziehen des Hohlrohres 18 aus dem Bohrloch 12 derart, dass das hydrophobierende Material 16 in dem Bohrloch 12 verbleibt.

Wie sich aus der Figur 3 ergibt, kann ein geringer Teil des hydrophobierenden Materials 16 vornehmlich durch die Schwerkraft in Risse oder Hohlräume 22 fallen. Der Großteil des hydrophobierenden Materials 16 bleibt jedoch zunächst einmal in dem Bohrloch 12 und entwickelt später von dort seine hydrophobierende Wirkung, indem sich ein in dem hydrophobierenden Material 16 enthaltener Wirkstoff in dem umliegenden Mauerwerk verteilt, wodurch eine Horizontalsperre gegen aufsteigende Feuchtigkeit erzeugt wird. Der heruntergefallene Teil entwickelt die hydrophobierende Wirkung im Auffangbereich. Bei flüchtigen Wirkstoffen verteilt sich das Material über die Luft des Hohlraums an und in den Baukörper.

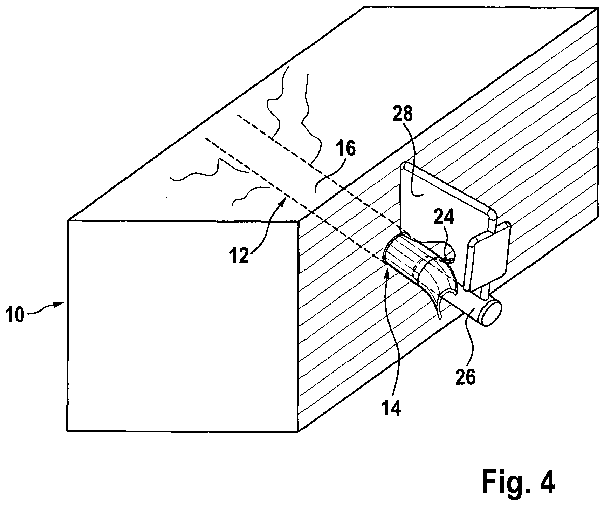

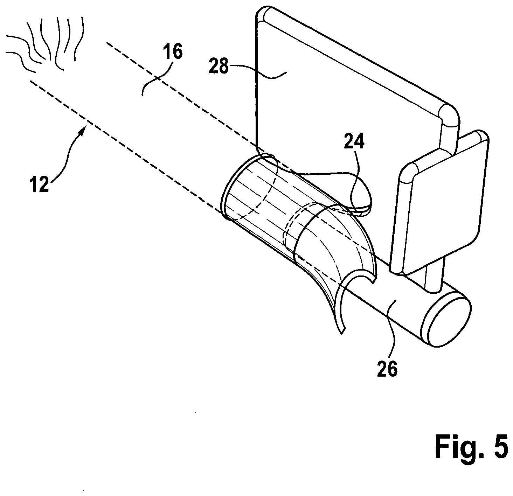

In den Figuren 4 und 5 wird ebenfalls ein mit einem hydrophobierenden oder abdichtenden Material 16 gefülltes Hohlrohr 18 verwendet. Zum Herausziehen des Hohlrohres aus dem Bohrloch 12, der art, dass nur noch das hydrophobierende oder abdichtende Material in dem Bohrloch verbleibt, wird ein Messer 24 bzw. eine Klinge zum seitlichen Aufschneiden des in das Bohrloch 12 eingebrachten, gefüllten Hohlrohres 18 von der Mündungsseite des Bohrloches verwendet, wobei an dem Messer 24 zum einen ein stempelähnlicher zylindrischer Körper 26 zum Verhindern des Austritts von Material aus dem Bohrloch sowie ein Griff 28 zum Halten und vorwärtsbewegen des Messers 28 vorgesehen sind. Mittels des Messers wird durch Aufschneiden des Hohlrohres ermöglicht, dass das Hohlrohr herrausgezogen werden kann, ohne dass Material aus dem Bohrloch heraustritt.

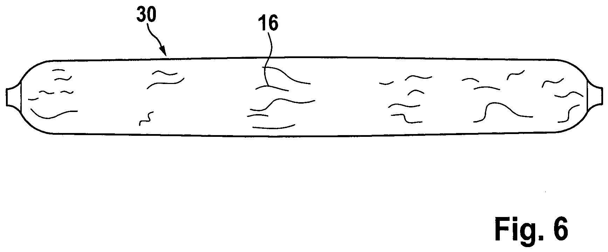

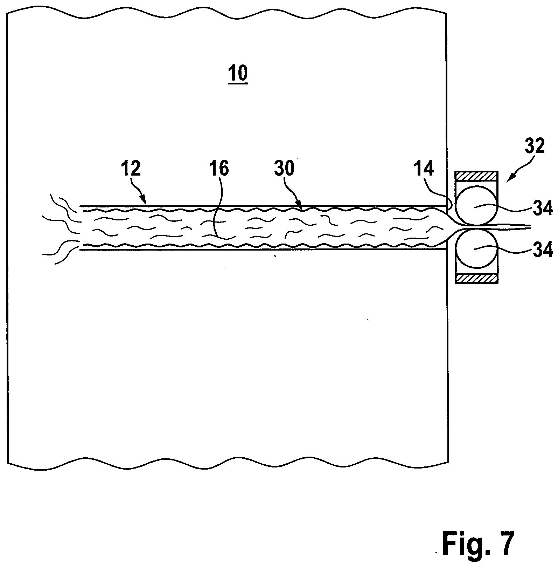

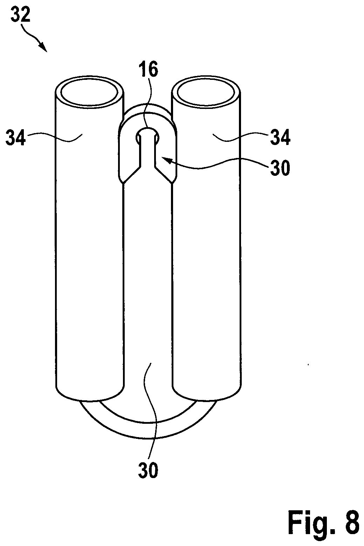

Die Figuren 6 bis 8 betreffen ein Verfahren zum Erzeugen einer Horizontalsperre gegen aufsteigende Feuchtigkeit in einem saugfähigen Körper, bei dem anstelle eines Hohlrohres eine wurstförmige Hülle 30 zum Einbringen eines hydrophobierenden oder abdichtenden Materials 16 verwendet wird. Die wurstförmige Hülle kann vor dem Einbringen derselben in ein Bohrloch 12 bereits am vorderen Ende oder aber erst vor dem Herausziehen der Hülle aus dem Bohrloch durch geeignete Maßnahmen geöffnet werden. Zum Beispiel können am vorderen Ende der Hülle 30 eine oder mehrere Perforationslinien (nicht gezeigt) vorgesehen sein, die ein Auf- bzw. Abreißen des vorderen Endes der Hülle bei Druckausübung ermöglichen.

Nach Einbringen der Hülle 30 in das Bohrloch 12 wird die Hülle 30 durch Zusammenpressen und gleichzeitiges Herausziehen aus dem Bohrloch 12 unter Verbleib des Materials 16 in dem Bohrloch 12 entfernt. In diesem Beispiel erfolgt das Zusammenpressen der Hülle 30 durch eine Vorrichtung 32, die in diesem Beispiel zwei i. W. zylindrische Körper 34 aufweist, die parallel zueinander - unter Bildung eines Spalts 36 - angeordnet sind. Die Hülle 30 wird durch den Spalt 36 gezogen und, da der Spalt 36 kleiner als der Durchmesser der mit Material 16 gefüllten Hülle 30 ist, zusammengepresst, wobei das Material 16 dadurch in dem Bohrloch 12 verbleibt. Anstelle der Vorrichtung 32 kann aber auch eine andere Vorrichtung verwendet werden oder kann die Hülle mit den Fingern zusammengedrückt werden.
Da bei dem vorangehend beschriebenen Verfahren gemäß einer besonderen Ausführungsform der vorliegenden Erfindung eine vorab festlegbare Wirkstoffmenge in das Bohrloch eingebracht werden kann, wird auf einfache Weise eine "Materialverschwendung" vermieden.

## Patentansprüche

1. Verfahren zum Erzeugen einer Horizontalsperre gegen aufsteigende Feuchtigkeit in einem saugfähigen Festkörper, vorzugsweise in einem Mauerwerk (10), in Beton oder Holz, umfassend:
vorzugsweise vollständiges Einbringen eines mit einem hydrophobierenden oder abdichtenden Material (16) gefüllten Hohlrohres (18) oder einer mit einem hydrophobierenden oder abdichtenden Material (16) gefüllten schlauch- oder wurstförmigen Hülle (30) in ein Bohrloch (12) in dem saugfähigen Festkörper, und
anschließendes Herausziehen des Hohlrohres (18) bzw. der Hülle (30) aus dem Bohrloch (12), derart, dass das hydrophobierende oder abdichtende Material (16) in dem Bohrloch (12) verbleibt,
oder umfassend:
Einbringen eines Hohlrohres (18) oder einer schlauch- oder wurstförmigen Hülle (30) in ein Bohrloch (12) in dem saugfähigen Festkörper,
Einbringen eines hydrophobierenden oder abdichtenden Materials (16) in das Hohlrohr (18) bzw. in die Hülle (30), und
anschließendes Herausziehen des Hohlrohres (18) bzw. der Hülle (30) aus dem Bohrloch (12), derart, dass das hydrophobierende oder abdichtende Material (16) in dem Bohrloch (12) verbleibt, **dadurch gekennzeichnet, dass** das hydrophobierende oder abdichtende Material (16) mittels eines Stempels in dem Hohlrohr (18) bzw. der Hülle (30) auf der Mündungsseite (14) des Bohrlochs (12) am Austreten aus dem Bohrloch (14) beim Herausziehen des Hohlrohres (18) bzw. der Hülle (30) gehindert wird.

2. Verfahren nach Anspruch 1, **dadurch gekennzeichnet, dass** das Bohrloch (12) nach dem Herausziehen des Hohlrohres (18) bzw. der Hülle (30) auf seiner Mündungsseite (14) verschlossen wird.

3. Verfahren nach einem der vorangehenden Ansprüche, **dadurch gekennzeichnet, dass** beim Herausziehen des Hohlrohres (18) selbiges seitlich aufgeschnitten und gleichzeitig das hydrophobierende oder abdichtende Material (16) am Austreten aus dem Bohrloch (12) gehindert wird.

4. Verfahren nach einem der vorangehenden Ansprüche, **dadurch gekennzeichnet, dass** das Bohrloch (12) horizontal verläuft.

5. Verfahren nach einem der vorangehenden Ansprüche, **dadurch gekennzeichnet, dass** das hydrophobierende oder abdichtende Material (16) ein Wirkstoff ist oder einen Wirkstoff umfasst, der ein Kunstharz oder eine Harzlösung, insbesondere eine organische Harzlösung, ein Wasserglas oder eine Verkieselung, insbesondere auf Basis von Silikaten, insbesondere Alkalisilikate, eine Silikonemulsion, insbesondere auf Basis von Siloxan und/oder Silan, oder eine Injektionscreme, insbesondere auf Basis von Silan und/oder Siloxan, ist.

## Claims

1. Method of generating a horizontal barrier against ascending moisture in an absorptive solid body, preferably in a brick wall (10) or in concrete or wood, comprising:
preferably fully introducing a hollow tube (18) filled with a hydrophobizing or sealing material (16) or a tubular or sausage-shaped shell (30) filled with a hydrophobizing or sealing material (16) into a borehole (12) in the absorptive body, and
then pulling the hollow tube (18) or the shell (30) out of the borehole (12) in such a way that the hydrophobizing or sealing material (16) remains in the borehole (12),
or comprising:
introducing a hollow tube (18) or a tubular or sausage-shaped shell (30) into a borehole (12) in the absorptive body,
introducing a hydrophobizing or sealing material (16) into the hollow body (18) or into the shell (30), and
then pulling the hollow tube (18) or the shell (30) out of the borehole (12) in such a way that the hydrophobizing or sealing material (16) remains in the borehole (12),
**characterized in that**
the hydrophobizing or sealing material (16), when the hollow tube (18) or the shell (30) is pulled out, is stopped from escaping from the borehole (14) by means of a ram in the hollow body (18) or the shell (30) at the opening end (14) of the borehole (12).

2. Method according to Claim 1, **characterized in that** the borehole (12), after the hollow tube (18) or the shell (30) has been pulled out, is closed at its opening end (14).

3. Method according to either of the preceding claims, **characterized in that**, when the hollow tube (18) is pulled out, it is cut open laterally and the hydrophobizing or sealing material (16) is simultaneously prevented from escaping from the borehole (12).

4. Method according to any of the preceding claims, **characterized in that** the borehole (12) runs horizontally.

5. Method according to any of the preceding claims, **characterized in that** the hydrophobizing or sealing material (16) is an active ingredient or comprises an active ingredient which is a synthetic resin or a resin solution, especially an organic resin solution, a waterglass or a silicification, especially based on silicates, especially alkali metal silicates, a silicone emulsion, especially based on siloxane and/or silane, or an injection cream, especially based on silane and/or siloxane.

## Revendications

1. Procédé de formation d'une barrière horizontale contre l'humidité montante dans un corps solide absorbant, de préférence dans un mur (10), dans du béton ou du bois, comprenant :
l'introduction de préférence totale d'un tube creux (18) rempli avec un matériau hydrophobant ou étanchéifiant (16) ou d'une gaine en forme de tuyau ou de boudin (30) remplie avec un matériau hydrophobant ou étanchéifiant (16) dans un trou percé (12) dans le corps solide absorbant, puis
l'extraction du tube creux (18) ou de la gaine (30) du trou percé (12), de telle sorte que le matériau hydrophobant ou étanchéifiant (16) reste dans le trou percé (12),
ou comprenant :
l'introduction d'un tube creux (18) ou d'une gaine en forme de tuyau ou de boudin (30) dans un trou percé (12) dans le corps solide absorbant,
l'introduction d'un matériau hydrophobant ou étanchéifiant (16) dans le tube creux (18) ou dans la gaine (30), puis
l'extraction du tube creux (18) ou de la gaine (30) du trou percé (12), de telle sorte que le matériau hydrophobant ou étanchéifiant (16) reste dans le trou percé (12), **caractérisé en ce que** le matériau hydrophobant ou étanchéifiant (16) est empêché de sortir du trou percé (14) lors de l'extraction du tube creux (18) ou de la gaine (30) au moyen d'un piston dans le tube creux (18) ou la gaine (30) sur le côté de l'embouchure (14) du trou percé (12).

2. Procédé selon la revendication 1, **caractérisé en ce que** le trou percé (12) est fermé sur son côté de l'embouchure (14) après l'extraction du tube creux (18) ou de la gaine (30).

3. Procédé selon l'une quelconque des revendications précédentes, **caractérisé en ce que**, lors de l'extraction du tube creux (18), celui-ci est découpé latéralement et, simultanément, le matériau hydrophobant ou étanchéifiant (16) est empêché de sortir du trou percé (12).

4. Procédé selon l'une quelconque des revendications précédentes, **caractérisé en ce que** le trou percé (12) est horizontal.

5. Procédé selon l'une quelconque des revendications précédentes, **caractérisé en ce que** le matériau hydrophobant ou étanchéifiant (16) est un agent actif ou comprend un agent actif, qui est une résine artificielle ou une solution de résine, notamment une solution de résine organique, un verre soluble ou une silification, notamment à base de silicates, notamment de silicates alcalins, une émulsion de silicone, notamment à base de siloxane et/ou de silane, ou une crème d'injection, notamment à base de silane et/ou de siloxane.
